# EUROPÄISCHE PATENTANMELDUNG

(11) **EP 2 848 327 A1**
(43) Veröffentlichungstag der Anmeldung: **18.03.2015**
(21) Anmeldenummer: 14401091.5
(22) Anmeldetag: 06.09.2014
(51) Int. Cl.: B21D 13/10, B21D 53/88, F16D 65/00

(54) **Flächenelement, insbesondere für ein Kraftfahrzeug**

(30) Priorität: 06.09.2013 DE 202013104064 U; 26.06.2014 DE 202014102912 U; 26.06.2014 DE 202014102911 U
(71) Anmelder: Westfalia Presstechnik GmbH & Co. KG, 08451 Crimmitschau (DE)
(72) Erfinder:
(74) Vertreter: Rumrich, Gabriele

(57) **Zusammenfassung**

Die Erfindung betrifft ein Flächenelement, welches insbesondere für ein Kraftfahrzeug einsetzbar ist und eine Vielzahl von Ausformungen aufweist, wobei die Ausformungen erfindungsgemäß in einem oder mehreren Flächenbereichen des Flächenelementes ausgebildet sind und ein oder mehrere gleiche oder unterschiedliche Muster bilden. (Figur 4)

## Beschreibung

Die Erfindung betrifft ein Flächenelement, welches insbesondere für ein Kraftfahrzeug einsetzbar ist, beispielweise eine Trennwand oder Abdeckung, ein Karosserieteil, eine Lehne eines Sitzes oder einer Sitzbank oder dergleichen.

In Wikipedia wird das Herstellen von Wölbstrukturen beschrieben. Danach ist das Wölbstrukturieren ein Verfahren der Umformtechnik, mit dem wahlweise viereckige oder sechseckige dreidimensionale Strukturen in dünnwandige Materialien, wie Blech, Kunststofffolie, Pappe und Papier, eingebracht werden. Es hebt sich von den konventionellen Verfahren der Blechumformung (z. B. Einprägen, Sicken, Hydroforming) durch einen energieminimierten Selbstorganisationsprozess ab, der besonders material-, energie- und ressourcenschonend ist. Die wichtigste Eigenschaft soll eine erhöhte Steifigkeit (Biege- und Beulsteifigkeit) sein. Für das Grundverfahren des Wölbstrukturierens benötigt man lediglich einen dünnwandigen Zylinder und starre Stützringe, die auf der Zylinderinnenseite eng anliegen. Wird der Zylinder mit einem Außendruck beaufschlagt, muss das Material zwischen den Stützringen nach innen ausweichen. Nach Überwindung eines Instabilitätspunktes bilden sich spontan Wölbstrukturen aus. Die umlaufenden, geraden Falten entstehen durch Abformen von Stützringen, wogegen sich die versetzen axialen Falten ohne hinterliegenden Werkzeugeingriff ganz von selbst (Selbstorganisation) und zugleich gleichmäßig versetzt einstellen. Je mehr Freiheit dem Material gegeben wird, sich zu verformen, umso mehr bildet sich die Form eines Wabenmusters. Das Wabenmuster weist eine symmetrische Anordnung der Falten auf, und so wird das dünnwandige Material wesentlich besser isotrop versteift.

Es sind mit dieser Lösung nur gleichmäßige und einfache geometrische Strukturen herstellbar, die wabenartig, d.h. sechseckig ausgestaltet sind.

Derartige Wölbstrukturen werden bereits in verschiedene Bauteile integriert.

Beispielsweise aus der Druckschrift DE 102 15 911 A1 (1. Daimler Karosserieteil - Kraftfahrzeugrückwand) ist ein Karosserieblech mit einer mir Versteifungszone offenbart, welches eine Wölbstruktur mit einer Vielzahl von gleich ausgebildeten Versteifungsbeulen aufweist. Die Beulen sind in der Form eines regelmäßigen hexagonalen Gitters angeordnet und die Wölbstruktur erstreckt sich im Wesentlichen über den gesamten Flächenbereich der Rückwand, wobei ein schmaler umlaufender Randstreifen und eine mittlere Befestigungszone nachträglich eingeebnet sind. Zur Herstellung dieser Wölbstruktur wird zunächst in einem Walzverfahren aus einem ebenen Blech ein wölbstrukturiertes Rohblech erzeugt, aus welchem dann in einem Prägeverfahren die Rückwand ausgeformt wird. Dabei lassen sich nur Formschalen mit verhältnismäßig einfacher Struktur erzeugen. Die Versteifungsbeulen bilden dabei ein einfaches regelmäßiges, symmetrisches Muster. Das nachträgliche Einebnen der Befestigungszone erfordert einen zusätzlichen Fertigungsschritt und kann sich nachteilig auswirken, da die Bereiche, welche sich durch den ersten Umformschritt zur Herstellung der Wölbstruktur bereits verfestigt wurden, nun nochmals beansprucht werden. Es besteht die Gefahr, dass sich Falten oder Risse ausbilden in dem Bereich, der nachträglich eingeebnet wurde.

Eine Vorrichtung zur Herstellung eines eine 3D-Strukturierung aufweisenden Bauteils mit einem Randbereich, der keine Strukturierung aufweist und im Wesentlichen gerade bzw. eben ausgebildet ist, wird in der Druckschrift DE 20 2011 051 111 U1 beschrieben. Unter Verwendung eines ersten Werkzeugelementes (Formstempels) mit einer Gravur erfolgt die Ausbildung einer 3D-Strukturierung in einem Bereich eines Halbzeuges in Form eines Bleches, welches auf den Formstempel auflegbar ist. An die Gravur des Formstempels schließt sich eine dem Randbereich des herzustellenden Bauteils im Wesentlichen entsprechende Randfläche an und bedarfsweise sind zwischen der Gravur und der Randfläche eine umlaufende Sicke und/oder ein umlaufender Freiwinkel angeordnet. Dem ersten Werkzeugelement gegenüberliegend ist ein zweites Werkzeugelement angeordnet ist, mit dem durch einen Energieeintrag das Material des Bleches in die Gravur des Formstempels einformbar ist. Auch hier werden 3D-Strukturierungen mit symmetrischem Verlauf erzeugt. Es ist nicht vorgesehen, in einem Flächenelement nur lokal Strukturierungen einzubringen.

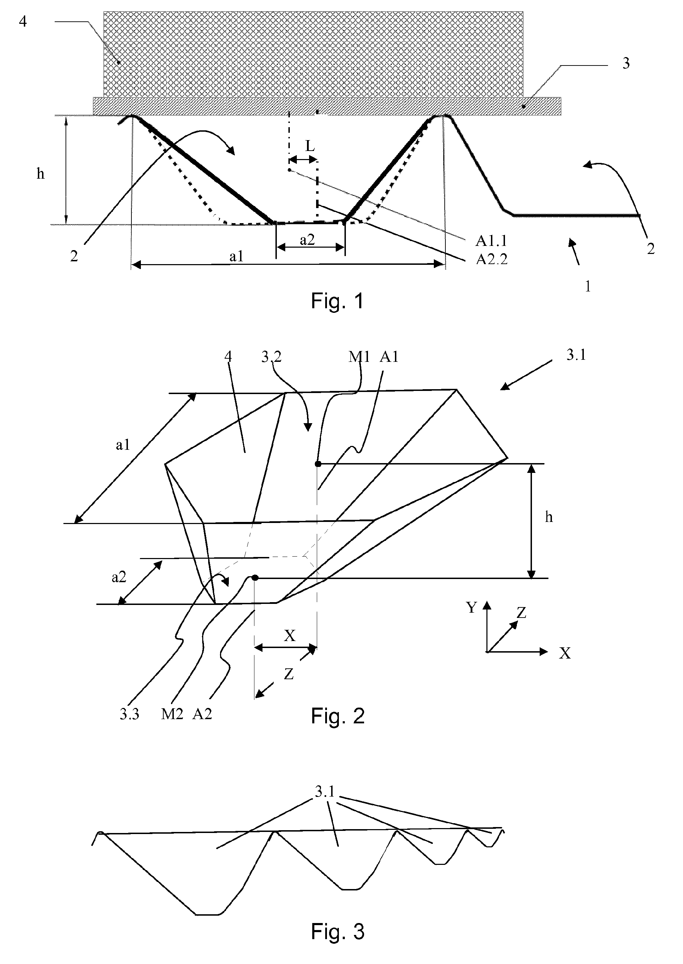

In der Druckschrift DE 10 2006 055 657 A1 wird ein Bauteil aus einem Flachmaterial mit einer zwischen zwei zueinander parallelen Hauptflächen gelegenen Mittelfläche beschrieben, wobei das Flachmaterial mit einer Verformungsstruktur versehen ist, die sich nach Art einer Pressung teilweise senkrecht zur Mittelfläche erstreckt und das Flachmaterial mit der Verformungsstruktur versehen ist, die aus einem Gitter aneinandergrenzender Zellen besteht, wobei die Zellen jeweils durch quer zur Mittelfläche sich erstreckende Zellbiegeränder begrenzt sind. Die Zellen sind dabei sechseckig ausgebildet und können auch aus gestreckten Sechsecken bestehen. Das Strukturfeld wird dabei einschließlich der Erhebungen von Zellbiegerändern im Rahmen einer Tiefziehoperation in das Flachmaterial (Blech oder Kunststoff) als leicht erhabenes Nebenformelement eingebracht. Zusätzlich ist ein umlaufender ebener Randbereich ausgebildet, was aus den Figuren 1a und 1b ersichtlich ist

Eine Wäschetrommel mit einer Wölbstrukturierung, die asymmetrisch ausgebildet sein kann, wird in DE 100 54 974 A1 beschrieben. Dadurch soll die Relativbewegung zum Waschgut beeinflusst werden. Wie die asymmetrische Form ausgebildet sein soll, wird nicht offenbart. Der Nachteil dieser vorgenannt beschriebenen einfachen Wölbstrukturen besteht darin, dass das Schwingungsverhalten für einige Anwendungsfälle ungünstig ist und dass es nicht möglich ist, bestimmte Materialbereiche mit anderen mechanischen Eigenschaften zu versehen, die beispielsweise eine höhere Steifigkeit und/oder ein anderes verbessertes Schwingungsverhalten bzw. eine verbesserte Schallabsorbierung gewährleisten.

Dünnwandige Formschale einer Fahrzeugkarosserie, die zumindest an zwei Umfangsseiten gehalten ist und mindestens ein Biegefeld mit einem im wesentlichen geraden Randabschnitt aufweist, ist aus der Druckschrift DE 103 21 032 B4 bekannt, Dabei ist das Biegefeld zur Erhöhung seiner Biegesteifigkeit mit mehreren eingeformten Versteifungsmulden versehen, die in Abweichung von den einfachen Wölbstrukturen insgesamt ein unregelmäßiges Muster bilden, wodurch sich bei einer hochfrequenten Schwingungsanregung ein besonders günstiges Schallabstrahlverhalten des Biegefeldes der Formschale ergeben soll. Benachbarte Versteifungsmulden in einem Umfangsabschnitt bilden eine gemeinsame Nahtlinie, die ein zusammenhängendes Liniennetz bilden. Das zusammenhängende Liniennetz kann sich dabei ungünstig auf die mechanischen Eigenschaften auswirken. Die Versteifungsmulde kann wie ein Abschnitt einer Ellipsoidenoberfläche oder ein Abschnitt einer Kugeloberfläche geformt sein. Eine asymmetrische Ausgestaltung der Versteifungsmulden ist nicht offenbart. Die Versteifungsmulden erstrecken sich über lokale Blechenbereiche. Zwischen diesen können bei einem Karosserieboden ein Mitteltunnel und Sitzträger angeordnet werden. Stufenförmig angehoben können beispielsweise ein Kabelkanal sowie ein Leitungskanal sein.

In der Druckschrift DE 10 2012 012 250 wird ein Fahrzeugsitz für ein Kraftfahrzeug, vorgeschlagen, welcher zwei Seitenträger und ein zwischen den Seitenträgern angeordnetes Flächenelement aufweist, wobei wenigstens das Flächenelement in Form einer fraktalen Versteifungsstruktur aufgebaut ist.

Nachteilig ist die Verwendung zusätzlicher Seitenteile, die in einem zusätzlichen Bearbeitungsschritt mit dem Flächenelement verbunden werden müssen. Die Quersteifigkeit des Sitzes ist dabei reduziert im Vergleich zur Längssteifigkeit, da in Querrichtung kein Versteifungsteil vorgesehen ist.

Die fraktale Versteifungsstruktur in dem Flächenelement reicht für einige Anwendungsfälle zur Gewährleistung der erforderlichen Steifigkeit nicht aus.

Aufgabe der Erfindung ist es, ein Flächenelement, welches insbesondere für ein Kraftfahrzeug einsetzbar ist, zu entwickeln, welches eine hohe Steifigkeit und verbesserte Funktionseigenschaften aufweist.

Diese Aufgabe wird erfindungsgemäß durch die Merkmale des ersten Patentanspruchs gelöst. Vorteilhafte Ausgestaltungen ergeben sich aus den Unteransprüchen.

Das Flächenelement, welches insbesondere für ein Kraftfahrzeug einsetzbar ist, weist erfindungsgemäß zumindest bereichsweise eine Vielzahl von Ausformungen auf, die in einem oder mehreren Flächenereichen des Flächenelementes ausgebildet sind und ein oder mehrere gleiche oder unterschiedliche Muster bilden und die Flächenbereiche zumindest bereichsweise umfangsseitig mit einem versteifenden Randbereich abgesetzt sind.

Ein Bereich des Flächenelementes, der keine Ausformungen besitzt, weist dabei eine erste Mittelnormale N1 auf, die höhenmäßig versetzt ist zu einer zweiten Mittelnormale wenigstens eines Ausformungen aufweisenden Flächenbereiches.

Dadurch wird umfangsseitig um den Flächenbereich, der mit Ausformungen versehen ist ein Höhensprung realisiert, der die Steifigkeit erhöht und einen störungsfreien Fertigungsprozess beim Einbringen der lokalen Strukturierungsprozesse beim Herstellen der Muster aufweisenden Flächenelemente gewährleistet.

Die ein Muster bildenden Ausformungen können dabei in ihrer Größe zumindest teilweise unterschiedlich sein und dabei eine Selbstähnlichkeit aufweisen.

Bevorzugt besteht das Muster aus einer Vielzahl von wabenförmigen, viereckigen, rautenförmigen, ovalen, tropfenförmigen oder anders gestalteten Ausformungen, die beliebig in Anordnung und Größe miteinander kombiniert sein können und sich über einen begrenzten Flächenbereich erstrecken, wobei in den Flächenbereichen, in denen kein Muster eingebracht ist, ein oder mehrere Versteifungselemente in der Art von Verstrebungen angeordnet sind. Diese Versteifungselemente können auch mit den Flächenbereichen, welche mit dem Muster versehen sind, eingebracht und mit dem Muster überlagert sein.

In ein oder mehrere Mustern, die in einen oder mehreren Flächenbereichen des Flächenelementes ausgebildet sind, können in eine oder mehrere Ausformung/en eine oder mehrere Unterausformungen eingebracht sein.

Vorteilhafter Weise ist das Flächenelement zumindest bereichsweise mit einem gebogenen Außenbereich versehen, bis in welchen sich die ein Muster bildenden Ausformungen und/oder die Versteifungselemente erstrecken.

Weiterhin kann das Flächenelement voneinander beabstandete Versteifungselemente in Form von Rippen und/oder Versteifungssicken aufweisen, die in sich (umlaufend) geschlossen oder offen ausgebildet sind und die Ausformungen in wenigstens einem sich zwischen den Versteifungselementen erstreckenden Flächenbereich des Flächenelementes ausgebildet sind. Die Ausformungen sind insbesondere in der Art einer Wölbstruktur ausgebildet oder weisen eine von der Wölbstruktur abweichende Form auf.

Die das Muster bildenden Ausformungen weisen eine dreieckige Form, eine viereckige Form, eine Tropfenform oder eine ovale oder runde Form auf oder sind als Vieleck mit mehr als sechs Ecken oder in der Art von bionischen Strukturen ausgebildet, wobei verschiedenartige Ausformungen zu dem Muster kombiniert sein können. Die Ausformungen, die in der Art einer Wölbstruktur oder anderweitig ausgebildet sind, weisen eine Höhe, eine Öffnung und einen sich daran anschließenden Wandbereich auf und verjüngen sich ausgehend von der Öffnung über die Höhe symmetrisch oder asymmetrisch entweder gleichmäßig oder stufenförmig.

Die Ausformungen weisen insbesondere eine von innen nach radial außen verlaufende Orientierungsrichtung auf.

Die Tiefe (Strukturtiefe) der Ausformungen kann sich dabei verändern. Beispielsweise kann die Tiefe der Ausformungen innen größer sein als außen oder umgekehrt.

Wenn die Erstreckungsrichtung der Ausformungen im Wesentlichen von innen nach außen gerichtet ist, bilden Bereiche, die sich zwischen den Ausformungen erstrecken, von radial innen nach radial außen verlaufende Versteifungsrippen. Weiterhin können sich innerhalb eines Musters zwischen den Versteifungsrippen quer zu diesen weitere Querversteifungsrippenerstrecken. Dadurch wird innerhalb des Flächenmusters zwischen den Ausformungen eine Struktur aus Versteifungsrippen gebildet.

Zwischen den Ausformungen aufweisenden Flächenbereichen und/oder innerhalb dieser Flächenbereiche können auch ein oder mehrere Funktionsbereiche in Form von ebenen und/oder strukturierten Flächen angeordnet sind, wobei wie Funktionsbereiche zur Befestigung weiterer Komponenten dienen können.

In den Befestigungsbereichen des Flächenelementes werden dann vorzugsweise keine Ausformungen vorgesehen und der Befestigungsbereich mehrlagig bzw. anderweitig verstärkt ausgebildet. Dies kann beispielsweise durch umfalten wenigstens eines Blechbereiches über einen anderen Blechbereich realisiert werden, wodurch die mehrfache Blechdicke im Befestigungsbereich vorhanden ist.

Weiterhin können zwischen den Ausformungen aufweisenden Flächenbereichen und/oder innerhalb dieser Flächenbereiche und/oder innerhalb der Funktionsbereiche bzw. Befestigungsbereiche ein oder mehrere Durchbrüche und/oder Aussparungen angeordnet sein.

Durch diese insgesamt neuartige Anordnung und Ausbildung mehrerer Ausformungen in einem Muster in der Abdeckung ist es möglich, die Eigenschaften, insbesondere den Strömungswiderstand, die Schallabsorption sowie Festigkeitseigenschaften zumindest bereichsweise zu beeinflussen oder bestimmte Kennzeichnungsfunktionen zu erfüllen.

Durch die in das Flächenelement eingebrachten Ausformungen können bei Verwendung als Außenteil der Karosserie Selbstreinigungseffekte erzielt werden.

Bei Verwendung des Flächenelementes als Innenteil des Fahrgastraumes wird die Haptik des Flächenelementes im Vergleich zu anderen Flächenelementen verändert. Dadurch ist es beispielsweise besser möglich, allein durch Tasten bestimmte zu betätigende Teile im Fahrzeug zu ermitteln. Weiterhin wird durch die Orientierung der Ausformungen des/der Muster von radial innen nach radial außen die Steifigkeit und die Dauerfestigkeit der des Flächenelementes, zum Beispiel einer Abdeckung, eines Bremsabdeckbleches, einer Wand usw. erhöht, wodurch deren Lebensdauer verlängert wird. Durch im Wesentlichen von innen nach außen verlaufende Ausformungen bei beispielsweise einem Bremsabdeckblech kann weiterhin eine verbesserte Luftströmung auf die angrenzenden Bauteile gewährleistet und somit die Wärmeableitung verbessert werden.

Es ist insbesondere bei einem Einsatz als Bremsabdeckblech im Fahrbetrieb die Umgebungsluft in Richtung zur Bremsscheibe einleitbar bzw. in die Reibzone der Bremsscheibe führbar, wodurch ein Kühleffekt hervorgerufen wird und die thermische Belastung verringert werden kann, was zur Verbesserung der Lebenddauer des Bremssystems, insbesondere der Bremsscheibe beiträgt.

Die Abdeckung / das Bremsabdeckblech weist dabei ausgehend von der Grundform/Hauptformelement des Bleches bzw. ausgehend von der Oberfläche des Ausgangsbleches, in dem das Muster eingebracht ist, Ausformungen auf, die ausgehend vom Hauptformelement eine Öffnung mit einem ersten Mittelpunkt aufweisen. Ausgehend von der Öffnung erstreckt sich ein Wandbereich der Ausformung zumindest bereichsweise asymmetrisch. Es wird dadurch ein Bodenbereich mit einem zweiten Mittelpunkt gebildet, oder, wenn der Boden ausgestanzt ist, eine der ersten Öffnung gegenüberliegende zweite Öffnung, mit einem zweiten Mittelpunkt, wobei der erste und der zweite Mittelpunkt in der Draufsicht nicht miteinender fluchten. Die durch den ersten und zweiten Mittelpunkt verlaufenden ersten und zweiten Achsen fluchten somit ebenfalls nicht, wobei die Achsen A1, A2 bevorzugt im Wesentlichen senkrecht zur Grundform/Hauptform des Bauteils ausgerichtet sind und ebenfalls nicht miteinander fluchten.

Dabei ist der umfangsseitige Wandbereich der Vertiefung ausgehend von der Blechebene (Mittelnormale) des Hauptformelementes, aus welcher die Ausformung/en erzeugt wurde/n, sechseckig und sich asymmetrisch verjüngend ausgebildet oder weist eine von der sechseckigen Form abweichenden umfangsseitigen Wandbereich auf, der sich asymmetrisch oder auch symmetrisch verjüngt.

Es ist möglich, dass die Asymmetrie wenigstens einer Ausformung in einem ersten Bereich des Bauteiles unterschiedlich ist von der Asymmetrie wenigstens einer Ausformung in einem zweiten Bereich des Bauteiles. Dadurch grenzen sich Bereiche optisch ab und können ggf. auch besser bei der Montage ausgerichtet werden. Die Asymmetrie der Ausformungen im ersten Bereich bzw. in einem ersten Muster kann dabei auch spiegelbildlich oder in einem Winkel verlaufend zur Asymmetrie der Ausformungen in einem anderen Bereich bzw. in einem anderen Muster von Ausformungen des Bauteiles sein. Es ist auch möglich, dass wenigstens eine symmetrische oder asymmetrische Ausformung, die optisch von weiteren Ausformungen des Musters abweicht, eine Markierung des Flächenelementes (z.B. der Abdeckung, des Bremsabdeckbleches, der Tennwand, der Sitz- oder Sitzbankrückwand usw.) bildet, die beispielsweise vorne/hinten, oben/unten bzw. links/rechts... usw. bezeichnen kann und ggf. auch zur Erleichterung der Montage oder für die Ausrichtung bei einem Fügevorgang dienen kann. Diese Markierung kann so gestaltet sein, dass diese durch ein Maschinensystem mittels entsprechender Auslesemittel ausgelesen werden kann, was für eine automatische Zuführung zur Montagestation bzw. für eine automatisierte Montage vorteilhaft ist.

Ist das Flächenelement in Form einer Abdeckung, beispielsweise in Form eines Bremsenabdeckbleches zur Abdeckung einer Bremsscheibe ausgebildet, ist dieses in axialer Richtung abgewinkelt oder schalenförmig gewölbt oder tellerartig ausgebildet und weist radial außen bevorzugt einen gebogenen Randbereich und wenigstens einen Befestigungsbereich mit wenigstens einer Befestigungsöffnung zur Befestigung beispielsweise an einem karosserieseitigen Radträger auf. Weiterhin ist das Bremsabdeckblech meist mit einer im Wesentlichen zentrischen Ausnehmung für angrenzende Bauteile wie z.B. dem Bremssattel versehen. Das Muster, welches durch die Vielzahl von Ausformungen gebildet wird, reicht an oder bis in den gebogenen Randbereich des Bremsabdeckbleches heran bzw. herein. Das Abdeckblech bzw. Bremsabdeckblech kann weiterhin Bereiche aufweisen, die stärker oder weniger stark gebogen sind. Umfangsseitig und/oder radial können die durch die Ausformungen gebildeten Muster wechseln.

Die Erfindung wird nachfolgend anhand von Ausführungsbeispielen und zugehörigen Zeichnungen erläutert. Es zeigen:
- Figur 1: eine Prinzipdarstellung zur Herstellung eines Flächenelementes mit einer asymmetrischen Ausformung,
- Figur 2: eine Prinzipdarstellung einer Ausformung mit sechseckiger Form,
- Figur 3: eine Variante, bei der sich die Größe hintereinander angeordneter Ausformungen von links nach rechts verringert,
- Figuren 4-7: einen Teil eines Flächenelements (hier eines Bremsabdeckbleches) mit bionisch gestaltete Ausformungen,
- Figuren 8 bis 22: einen Teil eines Flächenelements (hier eines Bremsabdeckbleches) mit weiteren Ausformungen,
- Figur 23: eine Prinzipdarstellung eines Schnittes durch ein Bremsabdeckblech,
- Figur 24: ein Beispiel eines Flächenelementes in Form einer Rückwand/ Lehne einer Sitzbank eines Fahrzeuges,
- Figur 25: die Vorderansicht eines Ausgangsbleches (Rohlings) mit drei radial nach innen weisenden im Wesentlichen viereckigen Laschen,
- Figur 26: die Vorderansicht eines Ausgangsteils mit über die Befestigungsbereiche umgebogenen Laschen und eingebrachten Durchbrüchen,
- Figur 27: einen Schnitt A-A gemäß Figur 2,
- Figur 28: eine Variante eines Ausgangsteils mit radial nach innen weisenden Laschen, die in Richtung zur Biegelinie verbreitert sind, so dass eine längere Biegelinie I vorhanden ist und mit ersten Durchbrüchen im Befestigungsbereich und zweiten größeren Durchbrüchen in zwei Laschen und einer Ausklinkung in der dritten Lasche,
- Figur 29: die Vorderansicht eines Ausgangsteils gem. Figur 4 mit über die Befestigungsbereiche umgebogenen Laschen,
- Figur 30: ein Ausgangsblech, bei dem zwei Laschen aus dem Ausgangsblech dreiseitig ausgestanzt sind, so dass eine Biegelinie gebildet wird,
- Figur 31: einen Schnitt durch den Befestigungsbereich nach dem Umbiegen der beiden Laschen,
- Figur 32: ein Ausgangsblech mit einem über zwei nebeneinander liegenden Durchbrüchen aufgebrachtem Verstärkungsteil, der sich über zwei Befestigungsbereiche erstreckt und einer sich an den Außendurchmesser anschließenden Lasche, die entlang einer Biegelinie radial nach innen gebogen wird und den dritten Befestigungsbereich verstärkt,
- Figur 33: die Vorderansicht eines Ausgangsbleches gem. Figur 8 mit umgebogener Lasche,
- Figur 34 bis 36: eine Variante der Befestigung eines Verstärkungsteils im Bereich eines Durchbruchs im Befestigungsbereich und dabei

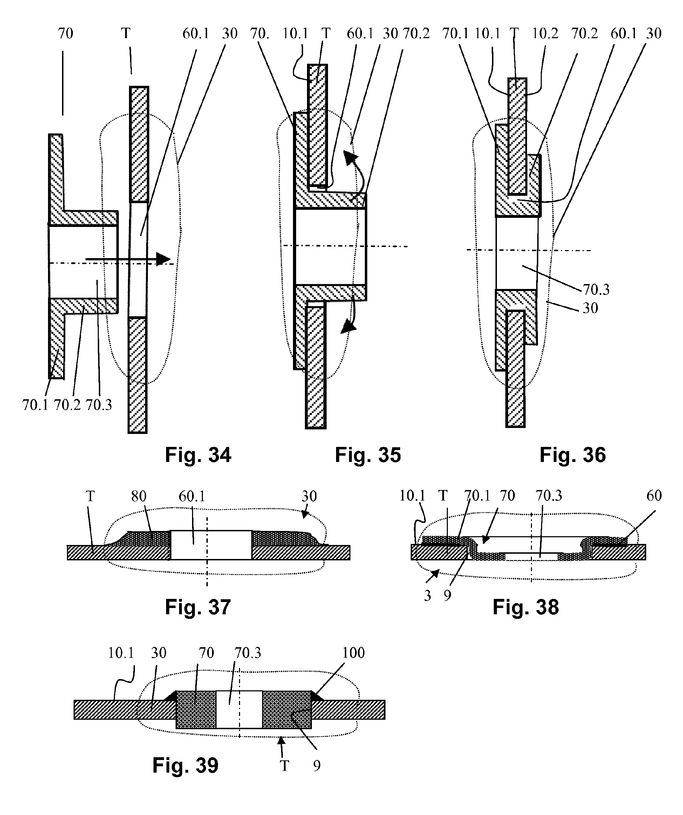

- Figur 34: ein Verstärkungsteil mit einem Flansch und einem zylindrischen Bereich, welches durch einen Durchbruch eines Befestigungsbereiches eines Bremsenabdeckbleches steckbar ist,
- Figur 35: ein Verstärkungsteil, welches mit dem zylindrischen Bereich durch den Durchbruch greift und mit dem Flansch am Ausgangsblech anliegt, wobei dann in Pfeilrichtung der durch das Ausgangsblech ragende Teil des zylinderförmigen Bereiches radial nach außen umgebördelt wird,
- Figur 36: das am Ausgangsblech / dem Bremsenabdeckbleche befestigte Verstärkungsteil,
- Figur 37: einen Schnitt durch einen Befestigungsbereich, bei wem eine Verstärkung durch Auftragsschweißen oder Auftragslöten aufgebracht ist und anschließend der Durchbruch eingebracht wurde,
- Figur 38: einen Schnitt durch einen Befestigungsbereich, der eine Ausstanzung aufweist, in der ein Verstärkungsteil sitzt, welches eine geringere Dicke als die Blechdicke des Ausgangsblechs aufweist,
- Figur 39: einen Schnitt durch einen Befestigungsbereich, der eine Ausstanzung aufweist, in der ein Verstärkungsteil sitzt, welches eine größere Dicke als die Blechdicke des Ausgangsblechs aufweist.

In Figur 1 wird eine Prinzipdarstellung zur Herstellung eines Flächenelementes mit asymmetrischen Ausformungen im Bereich nur einer Ausformung dargestellt. Das Werkzeug weist eine Form 1 entsprechend der zu erzeugenden Ausformung im Bauteil auf. Die Form 1 besitzt Vertiefungen 2 mit einer Höhe h, die für die Erzeugung von sechseckigen Ausformungen an der Oberseite eine Schlüsselweite/Stegbreite a1 mit einer Symmetrieachse A1.2 durch einen Mittelpunkt M1 und am Boden eine Schlüsselweite/Stegbreite a2 mit einer Symmetrieachse A2.2 durch den Mittelpunkt M2 aufweist. Durch die asymmetrische Anordnung der Symmetrieachsen A1.2, A2.2 der Vertiefung 2 der Form 1 des Werkzeuges wird eine analoge Vertiefung im Bauteil, welches die Abdeckung 3 bildet, hergestellt. Dazu wird das Ausgangsmaterial der Abdeckung 3 auf die Form 1 aufgelegt und gegen die Form 1 umgeformt, so dass sich der Werkstoff des Ausgangsmaterials in die Vertiefungen 2 einformt. Dies wird beispielsweise durch Druckbeaufschlagung mittels eines Elastomers 4 (oder andere geeignete bekannte Werkzeugelemente) realisiert. Die gestrichelten Linien deuten eine herkömmliche symmetrische Vertiefung an.

Figur 2 zeigt eine Prinzipdarstellung einer Ausformung 3.1 mit sechseckiger Form. Diese weist analog der Vertiefung in dem Werkzeug 1 eine Höhe h auf, sowie Schlüsselweiten a1, a2 mit zueinander in X und Z-Richtung versetzten Mittelpunkten M1, M2 und Symmetrieachsen A1, A2 auf und ist somit asymmetrisch ausgebildet, denn die Vertiefung verjüngt sich ausgehend von deren Öffnung 3.2 durch den asymmetrischen Verlauf des Wandbereiches 4 bis zum Boden 3.3, die versetzten Symmetrieachsen A1, A2 und die kleinere Schlüsselweite a2 asymmetrisch.

Eine weitere Variante ist in Figur 3 dargestellt. Hier sind asymmetrische Ausformungen 3.1, die eine Selbstähnlichkeit aufweisen, hintereinander angeordnet, wobei deren Größe bzw. deren Länge und Breite und Höhe sich von links nach rechts verringert.

Bei einem Flächenelement verringert sich die Höhe der Ausformungen bevorzugt vom Zentrum des Flächenbereiches, in dem das Muster eingebracht ist, nach außen oder umgekehrt. Um optische Effekte zu erzielen oder die Luftströmung zu beeinflussen, kann die durch die Asymmetrie der Ausformung/en des Flächenelementes die Reflexion beeinflusst oder der Luftstrom in eine bestimmte Vorzugsrichtung gelenkt werden. Weiterhin ist es möglich, durch die Aneinanderreihung/Verschachtelung von insbesondere selbstähnlichen insbesondere asymmetrischen Ausformungen und/oder symmetrischen Ausformungen, die von der sechseckigen Form abweichen, den Strömungswiderstand und/oder Steifigkeitseigenschaften des Flächenelementes bzw. Bauteils oder von Bereichen des Flächenelementes bzw. Bauteiles zu verändern.

Es wurden mehrere Versuche mit radialen Belastungsfällen an einem im Wesentlichen kreisrunden Blech ohne Ausformungen und an kreisrunden Blechen mit herkömmlichen sechseckigen Ausformungen, durchgeführt. Damit verglichen wurden radiale Belastungsfälle an im Wesentlichen kreisrunden Blechen mit Ausformungen, die von der sechseckigen Wabenform abweichen. Die Steifigkeit der untersuchten Bauteile mit den erfindungsgemäßen Ausformungen konnten im Vergleich zu einem Blech ohne Ausformungen bei gleichem Material und gleicher Blechdicke bei Biegebeanspruchung um ca. 70% erhöht werden. Sehr überraschend war, dass bei den Versuchsbauteilen mit Mustern, die rechteckigen Ausformungen beinhalten und mit fraktalartigen bionischen Ausformungen, die ein entsprechendes Muster bilden, die höchste Steifigkeit erzielt wurde und somit die Biegung am geringsten war. Ähnliche Ergebnisse wurden bei Torsionsbelastungen erzielt.

Mit der erfindungsgemäßen Lösung können damit die Bauteileigenschaften in Richtung Steifigkeit wesentlich verbessert werden, wodurch es auch möglich ist Bleche mit geringeren Blechdicken einzusetzen und somit insbesondere im Fahrzeugbereich Gewicht einzusparen.

Weiterhin haben sich Muster in Form von bionischen Ausformungen, d.h. Ausformungen, die der Natur entnommen und in Form von bionischen Strukturen ausgebildet sind, als besonders vorteilhaft erwiesen, insbesondere im Hinblick auf die Beeinflussung der Luftströmung auf zu kühlende Bereiche angrenzender Bauteile, Baugruppen und Systeme.

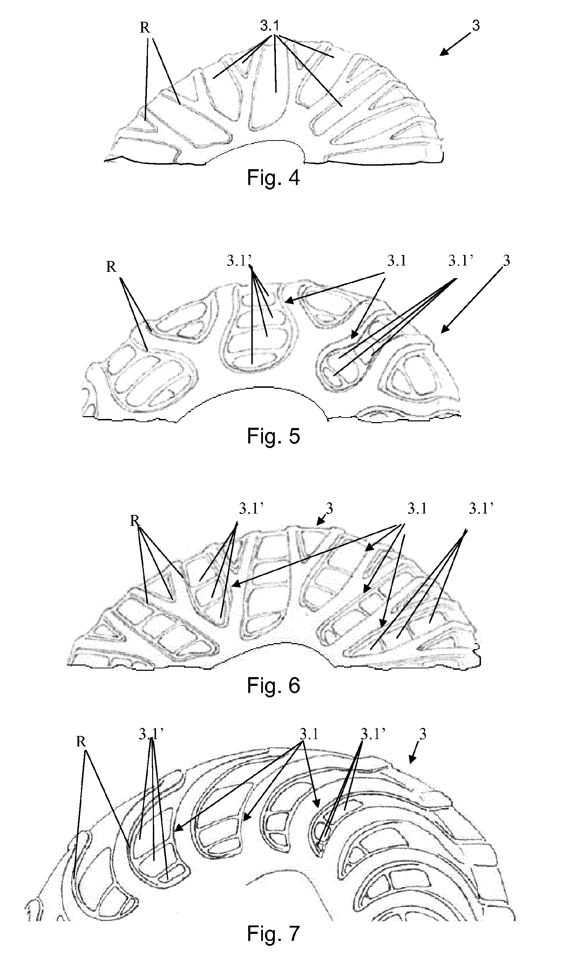

In den Figuren 4 bis 7 sind bionisch gestaltete Ausformungen 3.1, die ein fraktalartiges Muster bilden, in einem Flächenelement 3 in Form einer im Wesentlichen kreisförmigen Abdeckung, hier ein Bremsabdeckblech, mit einem nicht bezeichneten Durchbruch in einem Teilbereich des Bremsabdeckbleches dargestellt, die von radial innen nach außen zum Randbereich eines entsprechend umgeformten Bleches gerichtet sind, über die Fläche des Flächenelementes 3 sind die partiell in beabstandeten Flächenbereichen eingebrachten Ausformungen, die ein selbstähnliches Muster bilden ,kreisförmig verteilt und erstrecken sich bis in den Randbereich, wobei durch die Ausformungen 3.1 Versteifungszonen gebildet werden.

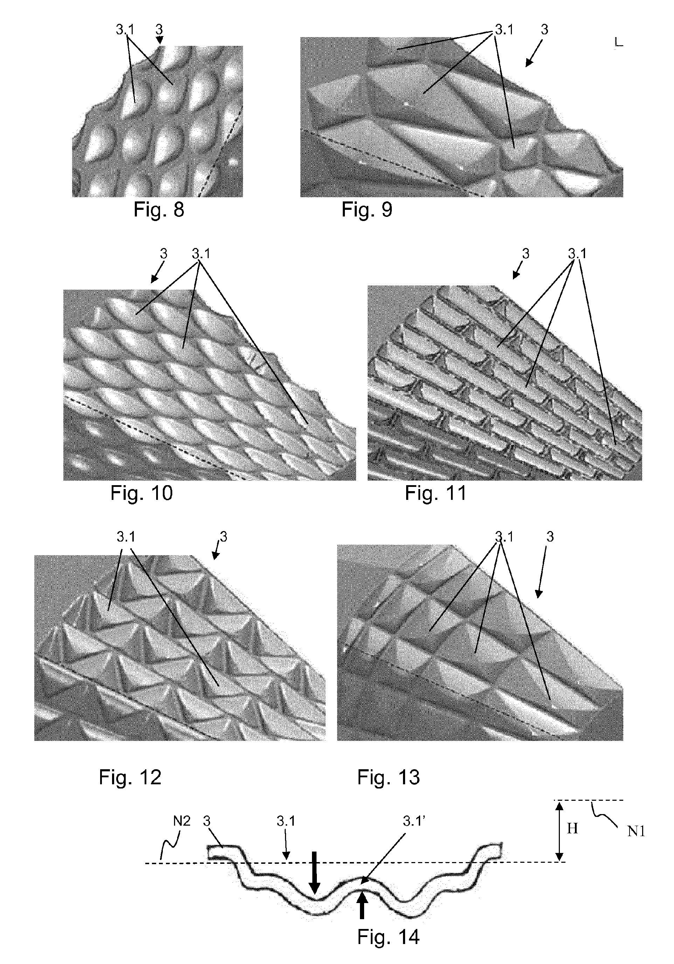

Dabei ist es möglich, in die Ausformungen 3.1, eine oder mehrere weitere "Unterausformungen" 3.1' in der Art von Nebenformelementen einzubringen, wie es in den Figuren 5 bis 7 in Anlehnung an die Form eines Seerosenblattes (Fig. 5, 6) und einer Muschelform (Fig. 8) dargestellt und bei fraktalen Strukturen üblich ist und dadurch die Steifigkeit der Abdeckung (hier des Bremsabdeckbleches) weiter zu erhöhen. Die Flächenbereiche, in welche die ein Muster bildenden Ausformungen 3.1 eingebracht sind, wurden umfangsseitig mit einem versteifenden Randbereich R abgesetzt.

Gemäß Figur 8 können Formelemente 3.1 in der dem Flächenelement 3 Muster aus einer Vielzahl von Ausformungen 3.1 in der Art von über- und nebeneinander angeordneten sich überlappenden Tropfen ausgebildet sein, deren Spitzen in entgegen gesetzte Richtungen weisen, oder gemäß Figur 9 können die ein Muster bildenden selbstähnlichen Ausformungen 3.1 des Bauteils 3 rautenartig in unterschiedlichen Größen und Anordnungen ausgebildet sein. Nach Figur 10 sind die Ausformungen 3.1 im Flächenelement 3 oval ausgebildet und ebenfalls zueinander versetzt angeordnet und bilden ein Muster in einem Flächenbereich des Flächenelementes 3.

In Figur 11 ist eine Variante dargestellt, bei der rechteckige sich mit den Seitenkanten überlappende Ausformungen 3.1 in im Flächenelement 3 vorgesehen sind, die hier beispielsweise vom Randbereich nach innen kleiner werden und dabei selbstähnlich sind. Bei dieser Variante eines Musters aus einer Vielzahl von sich aneinanderreihenden Ausformungen 3.1 wurde überraschender Weise die größte Steifigkeit erzielt.

In den Figuren 12 und 13 sind Muster aus ineinandergeschachtelten Dreiecken (Fig. 12) und Vierecken (Fig. 13) als Ausformungen 3.1 im Flächenelement 3 vorgesehen, wobei sich die Vierecke nicht an den Seitenkanten überlappen und die Länge der Vierecke nach innen größer wird, wobei eine Selbstähnlichkeit der Vierecke vorhanden ist.

In Figur 14 ist ein Schnitt einer Ausformung 3.1 dargestellt. Diese befindet sich in einem nicht bezeichneten Flächenbereich mit einer zweiten Mittelflächennormalen N2, der im Vergleich zu einer ersten Mittelflächennormalen N1 des Ausgangsbleches (die hier nur angedeutet ist) bzw. des Bereiches der keine Ausformungen aufweist, um eine Höhe H versetzt ist In der Ausformung 3.1 befindet sich eine Unterausformung 3.1', in eine dazu entgegen gesetzte Richtung - hier wieder in Richtung der zweiten Mittelflächennormalen N2 geformt ist. Die Umformrichtungen sind durch die fetten Pfeile angedeutet.

Dieser Höhensprung H wird beispielsweise durch Tiefziehen des die Ausformungen aufweisenden Flächenbereiches und dabei durch Erzeugung eines Randes R geschaffen (siehe z.B. Fig. 4 bis 7).

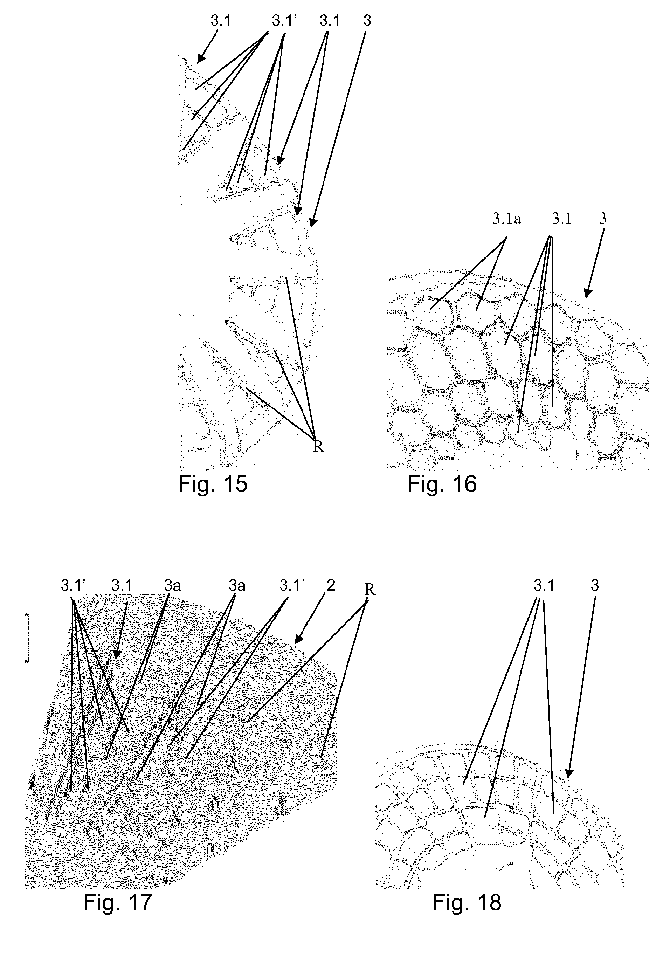

In Figur 15 ist eine Variante dargestellt, bei der welcher in ein im Wesentlichen rundes Flächenelement 3 in Form eines Bremsabdeckbleches, welches nur ausschnittesweise dargestellt ist, nach innen spitz zulaufende Sicken als Ausformungen 3.1 über den Umfang verteilt eingebracht sind. In die /Ausformungen 3.1 Sicken sind wiederum sich radial nach innen verjüngende Unterausformungen 3.1' eingeformt, die eine selbstähnlichkeit aufweisen und deren Größe nach innen abnimmt.

Auch hier ist ein Randbereich R um die Ausformungen aufweisenden Flächenbereiche vorgesehen.

Figur 16 zeigt eine weitere Variante, bei welcher ein Muster mit einer herkömmlichen Wabenstruktur 3.1 a umfangsseitig in dem Flächenelement 3 vorgesehen wurde. An diese schließen sich radial nach innen Ausformungen 3.1 an, die ebenfalls sechseckig, jedoch asymmetrisch ausgebildet sind und radial nach innen mit einer Selbstähnlichkeit kleiner werden. Es ist auch möglich, dass die Ausformungen 3.1 nach innen größer werden oder alle Ausformungen die gleiche Größe aufweisen.

Eine Ausgestaltung eines Flächenelementes 3 in Form eines ausschnittsweise dargestellten Bremsabdeckbleches, mit einer Vielzahl von Flächenbereichen, die umfangsseitig einen Randbereich R aufweisen und bei welchen eine Kombination sechseckiger wabenförmiger Ausformungen 3a mit trapezförmigen Unterausformungen 3.1', die in eine Ausformung 3.1 in Form einer trapezförmigen Sicke eingebracht sind, realisiert ist, zeigt Figur 17. Die Sicken / Ausformungen 3.1 weisen sich verjüngend von außen nach innen und sind in einem vorzugsweise gleichen Abstand in dem hier im Wesentlichen runden Bremsabdeckblech radial umlaufend als Muster angeordnet. In die von radial außen nach radial innen sich in der Breite verringernden Sicken / Ausformungen 3.1 ist radial außen zuerst eine sechseckige wabenförmige Ausformung 3a eingebracht an diese schließen sich zwei trapezförmige Unterausformungen 3.1 /halbe Sechsecke an, deren nicht bezeichnete zueinander parallele Seitenkanten von radial außen nach radial innen gerichtet sind und wobei deren kürzere (parallele) Seiten aufeinander zuweisen. Es schließt sich wieder eine sechseckige wabenförmige Ausformung 3a an, die jedoch umfangsseitig kleiner dimensioniert ist. An diese schließen sich wiederum zwei trapezförmige Unterausformungen 3.1 an und radial innen ist nochmals eine sechseckige wabenförmige Ausformung 3a angeordnet. Die Unterausformungen 3.1 werden von außen nach innen kleiner und sind selbstähnlich ausgeführt. Je nach Größe des Flächenelementes bzw. Bauteils - hier des Abdeckblechs - kann die Anzahl und/oder Größe der Ausformungen und/oder Unterausformungen variieren.

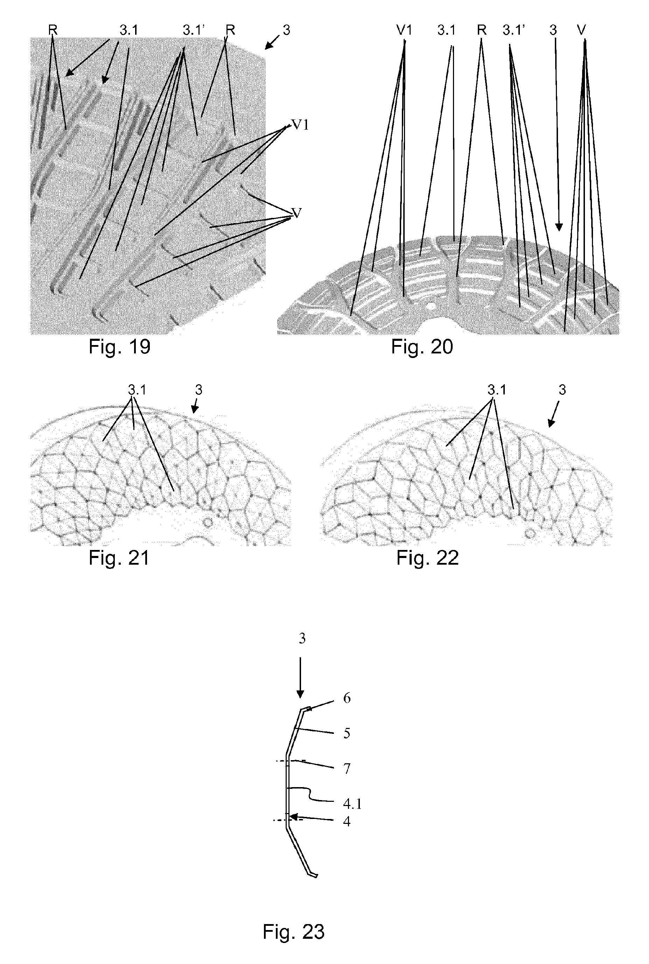

Quadratische und rechteckige Ausformungen 3.1 sind bei dem nächsten Flächenelement 3 (Fig. 18) miteinander kombiniert, wobei radial außen hier in zwei Reihen im Wesentlichen quadratische Ausformungen 3.1 ein erstes Muster und radial innen im Wesentlichen rechteckförmige Ausformungen 3.1 kreisförmig angeordnet sind und ein zweites Muster bilden. Weitere Varianten von im Wesentlichen kreisförmigen Flächenelementen 3/ Bremsabdeckblechen (ausschnittsweise dargestellt), die eine Vielzahl von Flächenbereichen aufweisen, die mit einem umfangsseitigen Randbereich R versteift sind und ein Muster mit radial von außen nach innen weisenden Sicken als Ausformungen 3.1 und darin eingebrachten viereckigen Unterausformungen 3.1'aufweisen, sind in den Figuren 19 und 20 dargestellt. Die Sicken / Ausformungen 3.1 mit dem Unterausformungen 3.1' bilden ein Muster mit selbstähnlichen Ausformungen und sind umfangsseitig verteilt angeordnet. Die langgestreckten von radial Außen nach radial innen reichenden Ausformungen 3.1 erweitern sich radial nach innen zuerst und werden dann in Richtung zum Zentrum des Flächenelementes 3 / des Bremsabdeckbleches wieder schmaler. Die Ausformungen 3.1 erstrecken sich somit vom Randbereich radial nach innen.

Bei der in Figur 20 dargestellten Variante ist der umfangsseitig außen liegende Randbereich umgebogen und die Ausformungen und erstrecken sich bis in den Randbereich hinein.

Bei den Varianten nach Fig. 19 und 20 sind innerhalb der Ausformungen 3.1 und zwischen den Bereichen der Ausformungen 3.1, die voneinander beabstandet sind Unterausformungen 3.1' eingebracht, die im Wesentlichen viereckig ausgebildet und von Innen nach außen beabstandet sind, so dass sich eine im Wesentlichen in Umfangsrichtung ausgerichtete Verrippung V ergibt, Zwischen den Ausformungen 3.1 erstrecken sich von radial innen nach außen bis in den Randbereich stegförmige Versteifungsrippen V1, die in der Ausgangsebene des Bleches verlaufen, in der sich auch die hier nicht bezeichnete ersten Mittelflächennormale erstreckt und sich außen verzweigen. Quer zwischen den von innen nach außen verlaufenden Versteifungsrippen V1 erstreckt sich die Verrippung V (Querverrippung). Aus bei den Figuren 4 bis 7, 15, 17 und 19 sind die von innen nach außen verlaufenden Versteifungsrippen zwischen den Ausformungen 3.1 und die innerhalb der Ausformungen 3.1 zwischen den Versteifungsrippen V1 gebildete Querverrippung V ersichtlich aber nicht bezeichnet.

Die Versteifungsrippen V1 verlaufen somit im Wesentlichen radial von innen nach außen und von einer Versteifungsrippe V1 zur benachbarten Versteifungsrippe V1 erstrecken sich zusätzliche Querversteifungsrippen V, die im Wesentlichen umfangsseitig ausgerichtet sind. Die Verrippung bildet somit eine Art versteifende Kragarme, zwischen welchen die Ausformungen als Flächenmuster angeordnet sind, wodurch die Steifigkeit der Abdeckung im Vergleich zu herkömmlichen Lösungen erheblich erhöht wird.

Zwei weitere Varianten mit asymmetrisch gestalteten selbstähnlichen sechseckigen Ausformungen 3.1, die radial nach innen kleiner werden, zeigen die Figuren 21 und 22, wobei die Ausformungen 3.1 radial nach innen eine größere Länge aufweisen.

Neben den dargestellten Beispielen sind selbstverständlich auch andere Gestaltungen und Kombinationen von Ausformungen/Unterausformungen realisierbar.

In Figur 23 ist ein Schnitt durch ein Flächenelement 3 in Form eines Bremsabdeckbleches dargestellt. Daraus ist ersichtlich, dass es zuerst radial innen einen im Wesentlichen flachen / scheibenförmigen Bereich 4 mit einer Aussparung 4.1 aufweist, dann in axialer Richtung in einem Bereich 5 abgewinkelt ist und sich radial außen ein nochmals abgewinkelter / gebogener äußerer Randbereich 6 anschließt. Die Befestigung des Bremsabdeckbleches 3 erfolgt in dem inneren Bereich 4 mittels angedeuteter Befestigungselemente 7. Die hier nicht dargestellten Ausformungen erstrecken sich ab dem inneren flachen Befestigungsbereich 4 bis an oder in den äußeren Randbereich 6.

Durch diese Form reicht das Bremsabdeckblech mit seinem mittleren Bereich bis nahe an die Bremsscheibe heran, wodurch vermieden wird, dass sich Steine oder andere Verschmutzungen im Bereich der Bremsscheibe verklemmen.

Anstelle abgewinkelter Bereiche 5 und 6 kann das Bremsabdeckblech bzw. ein anderes beliebiges Flächenelement auch andere dreidimensional gekrümmte Form aufweisen, beispielsweise eine gewölbte Schalenform, Tellerform oder eine anderweitig gebogene Form aufweisen. Auch können die in axialer Richtung gebogenen Bereiche in Umfangsrichtung des Abdeckbleches unterschiedlich sein, so dass das Abdeckblech unterschiedliche Umformzonen aufweist. Im Bereich, der sich an die zentrische Aussparung bzw. an die Aussparung, die vom Zentrum zum Randbereich reicht (Aussparung für den Radträger oder die Bremsanlage), anschließt, werden keine Ausformungen vorgesehen oder es können Ausformungen mit anderen Formen und/oder Größen vorgesehen sein.

Es ist auch möglich, dass Flächenelement bereichsweise stärker zu biegen und umfangsseitig und/oder radial einen Wechsel der Ausformungsarten und/oder der Ausformungsgrößen vorzunehmen.

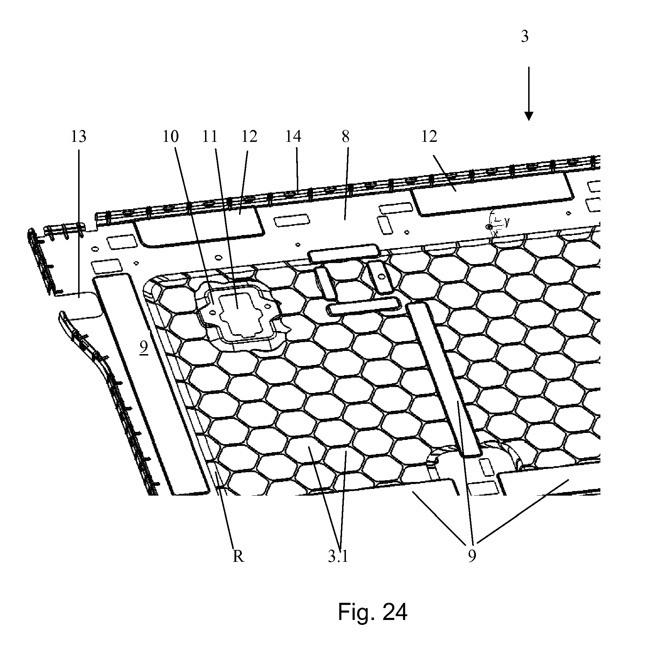

Figur 24 zeigt ein Beispiel eines Flächenelementes 3 in Form einer Rückwand/Lehne einer Sitzbank eines Fahrzeuges. In einem mittigen Flächenbereich sind eine Vielzahl von Ausformungen 3.1 eingebracht, die selbstähnlich sind und ein Muster bilden. Zur Vereinfachung der Darstellung wurden hier nur sechseckige Ausformungen eingezeichnet. Die Ausformungen können alternativ auch die vorbenannt beschriebenen Formen aufweisen und beliebig kombiniert sein. Den die Ausformungen 3.1 aufweisende Flächenbereich umgibt eine versteifender Randbereich R, durch welchen auch ein Absatz gebildet wird, durch den das Höhenniveau des Ausformungen 3.1 aufweisenden Flächenbereiches abgesetzt ist vom Höhenniveau des Bereiches des Ausgangsblechs 8, der keine Ausformungen aufweist. Innerhalb der Flächenbereiche mit dem ein Muster bildenden Ausformungen 3 und im Bereich des Ausgangsbleches 8 sind Fügeflächen 9 vorgesehen. Weiterhin können in den Flächenbereich der die Ausformungen 3 aufweist, im Wesentlichen ebene Funktionsflächen 10 integriert sein, die keine Ausformungen aufweisen und hier zusätzlich mit einem Durchbruch 11 versehen sind. Das Flächenelement 3 weist weiterhin Anbindungen 12 für nicht dargestellte Kopfstützen der Rückwand sowie Ausklinkungen 13 für dessen Verriegelung und weitere hier nicht sichtbare Ausklinkungen für das Gurtsystem usw. auf. Umfangsseitig ist das Flächenelement ausgehend vom Ausgangsblech 8 Randbereich 14 versehen.

Eine ähnliche konstruktive Ausführung ist beispielsweise auch bei einer Lehne eines Fahrzeugsitzes realisierbar.

Die erfindungsgemäße Lösung dient zur Schaffung von Flächenelementes mit Versteifungsstrukturen in Form von Mustern, die durch Ausformungen gebildet werden, zur Verbesserung der Steifigkeit und Schwingungsresistenz, Anzeige der Einbaulage, und zur Verbesserung des Strömungsverhaltens, zur gezielten Erzeugung eines Luftstromes und der Verringerung Schmutzadhäsion. Ein weiterer Vorteil ist die Reduzierung der Eigenschwingungen des Bauteils. Weiterhin ist es möglich, das Gewicht der Flächenelemente zu reduzieren, da aufgrund der erhöhten Steifigkeit die Ausgangsblechdicke reduziert werden kann, was für den Leichbau förderlich ist. Durch die höhere Steifigkeit wird auch den fahrdynamischen Aspekten Rechnung getragen und Schwingungen der Flächenelemente reduziert.

Insbesondere, wenn die Ausformungen bis in den äußeren Bereich des Flächenelementes reichen, wird dessen Steifigkeit erhöht und im Fahrbetrieb die Eigenschwingungen reduziert. Durch die immer dünner werdenden Bauteile, welche aufgrund der Versteifung durch die Ausformungen möglich ist, besteht jedoch das Problem, dass an den Befestigungsbereichen des Flächenelementes durch die sehr geringe Blechdicke das Blech reißen kann.

Um dies zu vermeiden, kann das Flächenelement, dessen Blechdicke stark reduziert ist, in den Bereichen in denen es an anderen Bauteilen befestigt werden muss oder an den Bereiche, in welchem an dem Flächenelement weitere Bauteile zu befestigen sind, eine Verstärkung aufweisen.

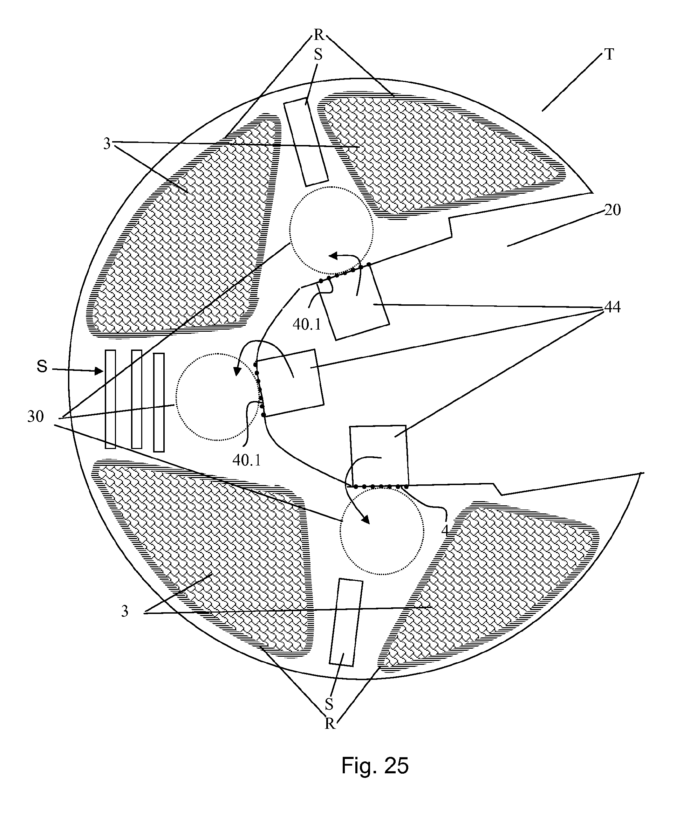

Dies wird nachfolgend an einem Flächenelement in Form eines Bremsenabdeckbleches beschrieben und ist in den Figuren 25 bis 39 dargestellt.

In Figur 25 ist die Vorderansicht eines Ausgangsblechs (Rohling - Ausgangsteil) T dargestellt, welches die Basis für ein Bremsenabdeckblech bildet. Es ist im Wesentlichen tellerförmig ausgebildet und weist eine Aussparung 20 auf, durch welche nach der Befestigung des Bremsenabdeckbleches angrenzende Teile wie zum Beispiel der Radträger greifen kann. Es sind drei gestrichelt umrandete Befestigungsbereiche 30 vorgesehen, mit denen das fertig gestellte Bremsenabdeckblech an einem Radträger oder dergleichen befestigbar ist.

Das Ausgangsblech T weist weiterhin drei radial nach innen in die Aussparung 20 ragende im Wesentlichen viereckigen Laschen 40 auf, welche um fett gestrichelt angedeutete Biegelinien 40.1 in Pfeilrichtung biegbar sind. Es weist hier insgesamt 4 nicht separat bezeichnete Flächenbereiche auf, welche mit Ausformungen 3, die ein Muster bilden, versehen sind. Um die Flächenbereiche erstrecken sich versteifende Randbereiche R. Die Flächenbereiche können auch andere Formen und eine andere Anzahl aufweisen. Zwischen den Flächenbereichen sind hier zusätzliche Versteifungsstrukturen S angedeutet, beispielsweise Sicken, die ebenfalls eine andere Form, einen anderen Verlauf und eine andere Anzahl in dem Flächenelement aufweisen können. Die Flächenelemente mit den Ausformungen 3 und die Versteifungsstrukturen S sind nur in Figur 25 andeutungsweise dargestellt und werden in den nachfolgenden Figuren zur Vereinfachung der Darstellungen nicht gezeigt, können aber auch dort vorhanden sein.

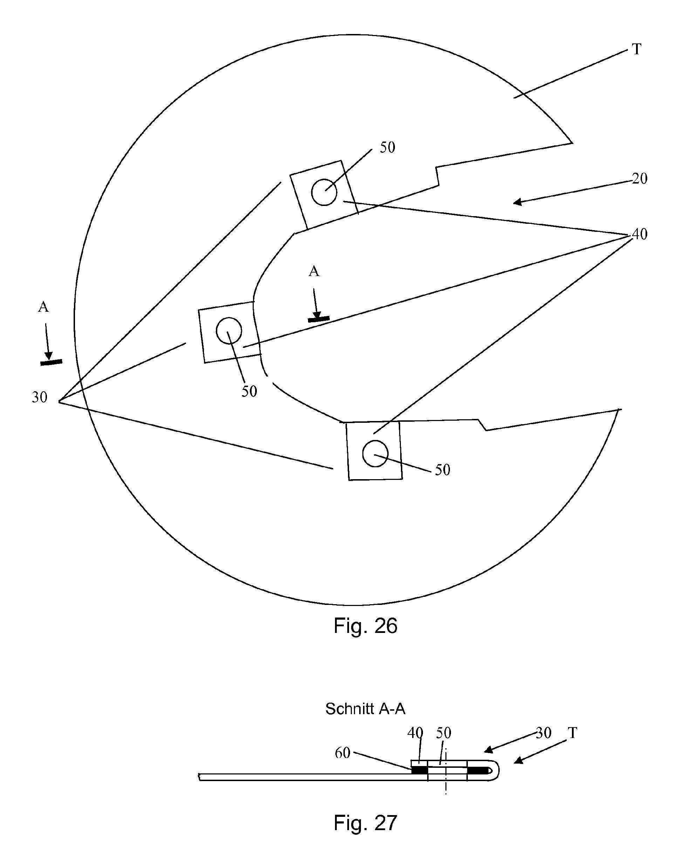

Figur 26 zeigt die Vorderansicht eines Ausgangsteils T mit über die Befestigungsbereiche 30 umgebogenen Laschen 40. In den Befestigungsbereichen 30 wurden Durchbrüche 40 für die Befestigung an einem Radträger (nicht dargestellt) eingebracht.

Aus Figur 27 ist ersichtlich, dass die Laschen 40 zusätzlich mittels einer Klebeverbindung 60 vollflächig befestigt sein können und dass durch den Befestigungsbereich 30 der Durchbruch 50 reicht.

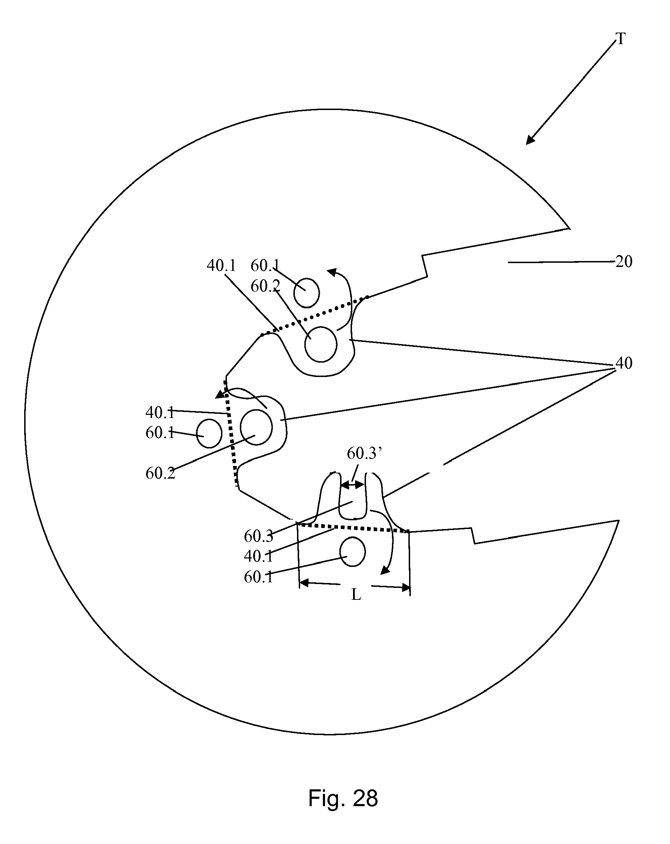

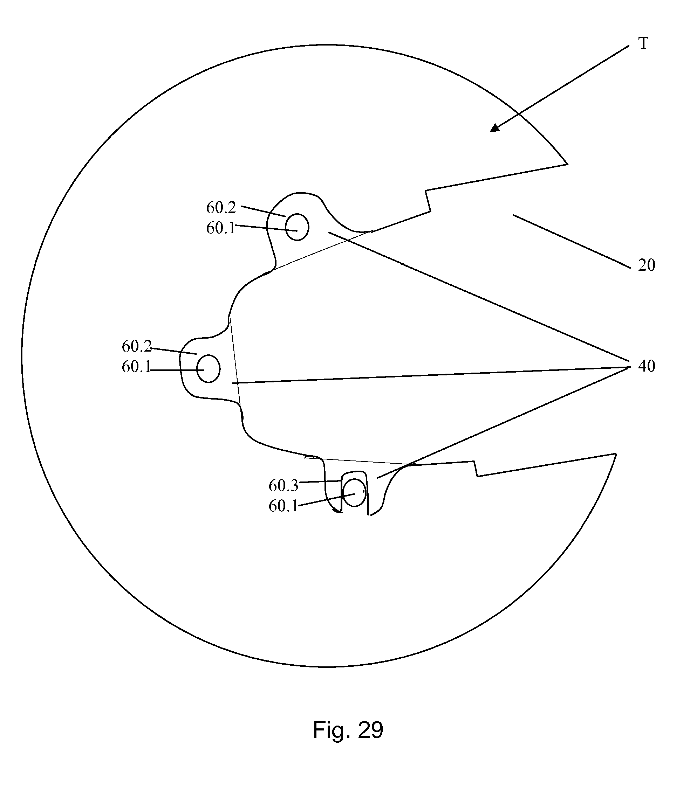

Figur 28 zeigt eine Variante eines Ausgangsteils T mit drei radial nach innen in die Aussparung 20 des Ausgangsbleches T weisenden Laschen 40, die in Richtung zur Biegelinie 40.1 verbreitert sind, so dass eine größere Länge I der Biegelinie 40.1 vorhanden ist und damit eine höhere Steifigkeit gewährleistet wird. Es sind drei erste Durchbrüche 60.1 in den hier nicht bezeichneten Befestigungsbereichen eingebracht. In den beiden hier oberen Laschen 30 wurde jeweils ein größerer zweiter Durchbruch 60.2 eingebracht. In die hier untere dritte Lasche 40 ist eine U-förmige Ausklinkung 60.3 eingebracht, deren Breite 60.3' im Wesentlichen dem Durchmesser des ersten Durchbruchs 60.1 entspricht. Nach dem Umbiegen der drei Laschen 40 liegen die zweiten Durchbrüche 60.2 der Laschen 40 über den ersten Durchbrüchen 10.1 bzw. die Ausklinkung 60.3 der hier unteren Lasche 40 über dem ersten Durchbruch 60.1, was aus Figur 29 ersichtlich ist. In den hier nicht bezeichneten Befestigungsbereichen ist somit die doppelte Blechdicke vorhanden.

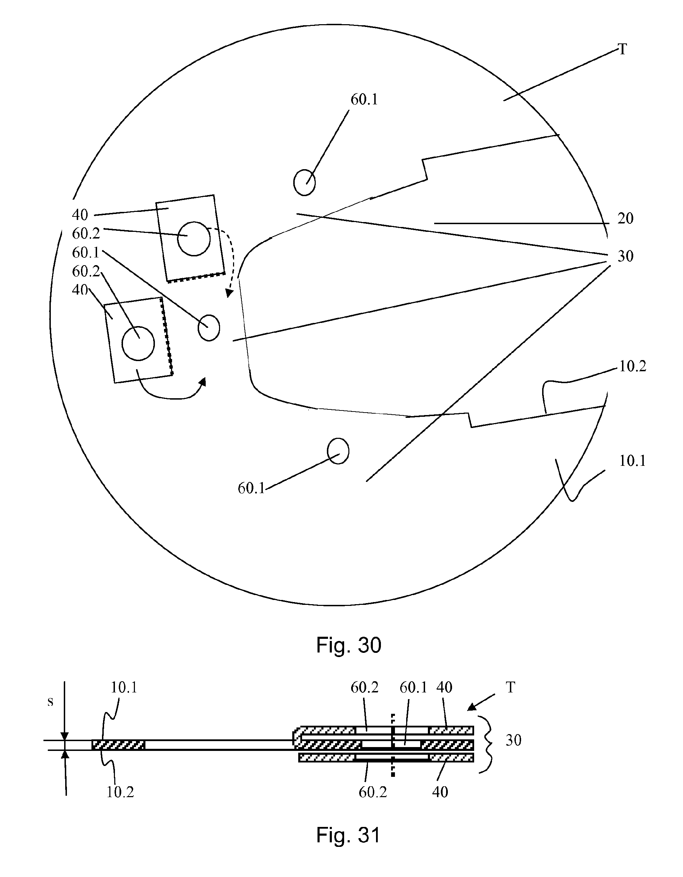

Eine weitere Variante, eines Ausgangsbleches T für eine Bremsenabdeckung ist in Figur 30 dargestellt. Bei dieser Ausführungsform sind drei Befestigungsbereiche 30 vorgesehen, welche jeweils einen ersten Durchbruch 60.1 aufweisen.

Dem hier mittleren Befestigungsbereich 30 sind zwei verstärkende Laschen 40 zugeordnet, die aus dem Ausgangsblech T dreiseitig ausgestanzt sind, so dass jeweils eine Biegelinie 40.1 gebildet wird. In jeder Lasche 40 wurde ein zweiter Durchbruch 60.2 eingebracht, der etwas größer ist als der erste Durchbruch 60.1. In den anderen beiden Befestigungsbereichen 3, die hier in der Zeichnung gem. Figur 30 oben und unten angeordnet sind, ist keine Verstärkung vorgesehen. Eine Lasche 40 (die hier links angeordnete) wird auf die Oberseite 10.1 und die andere (hier oben angeordnete) Lasche 40 auf die Rückseite 10.1 des Ausgangsbleches T in Richtung der angedeuteten Pfeile um die Biegelinien 40.1 gebogen. Der dadurch erzeugte Befestigungsbereich 30 mit einer dreifachen Blechdicke s ist aus dem Schnitt durch den entsprechenden Befestigungsbereich 30 gemäß Figur 31 ersichtlich. Die beiden Laschen 40 liegen an der Oberseite 10.1 und an der Unterseite 10.2 des Ausgangsbleches T an und der erste Durchbruch 60.1 fluchtet mit den darüber und darunter liegenden zweiten Durchbrüchen 60.2. Auch bei dieser Variante können die Laschen 40 zusätzlich angeklebt oder angeschweißt werden.

Durch die umgebogenen Laschen, die zur Verstärkung des Befestigungsbereichesdienen, werden gleichzeitig Lüftungsöffnungen in dem Bremsenabdeckblech gebildet, durch welche eine die Kühlleistung der Bremse erhöht wird.

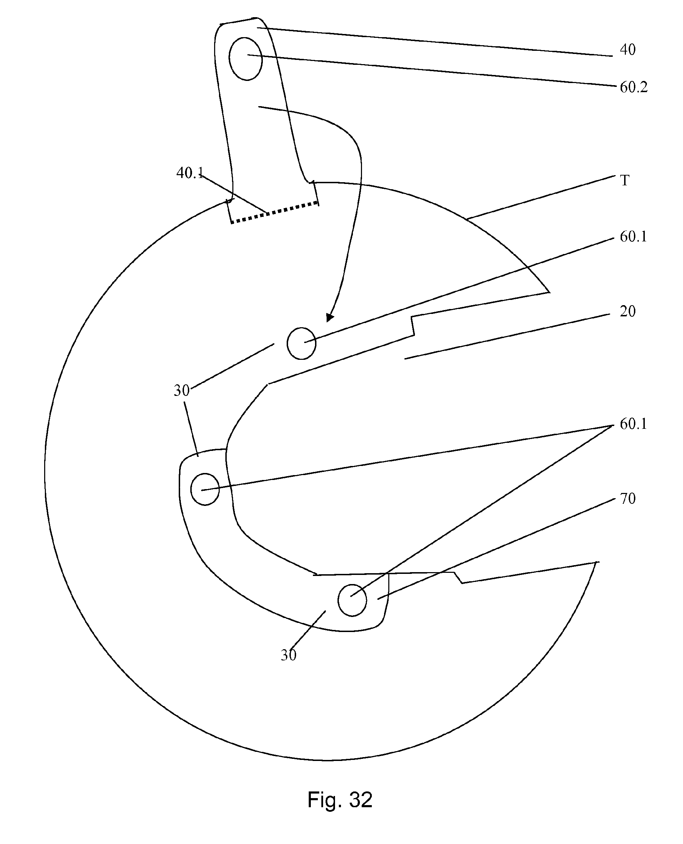

Figur 32 zeigt ein Ausgangsblech T mit einem über zwei nebeneinander liegenden Durchbrüchen 60.1 aufgebrachtem Verstärkungsteil 70, das sich über zwei Befestigungsbereiche 30 erstreckt und einer sich an den Außendurchmesser anschließenden Lasche 40, die entlang einer Biegelinie 40.1 radial nach innen biegbar ist und den hier oben liegenden dritten Befestigungsbereich 30, in den ebenfalls ein erster Durchbruch 60.1 eingebracht ist, verstärken soll.

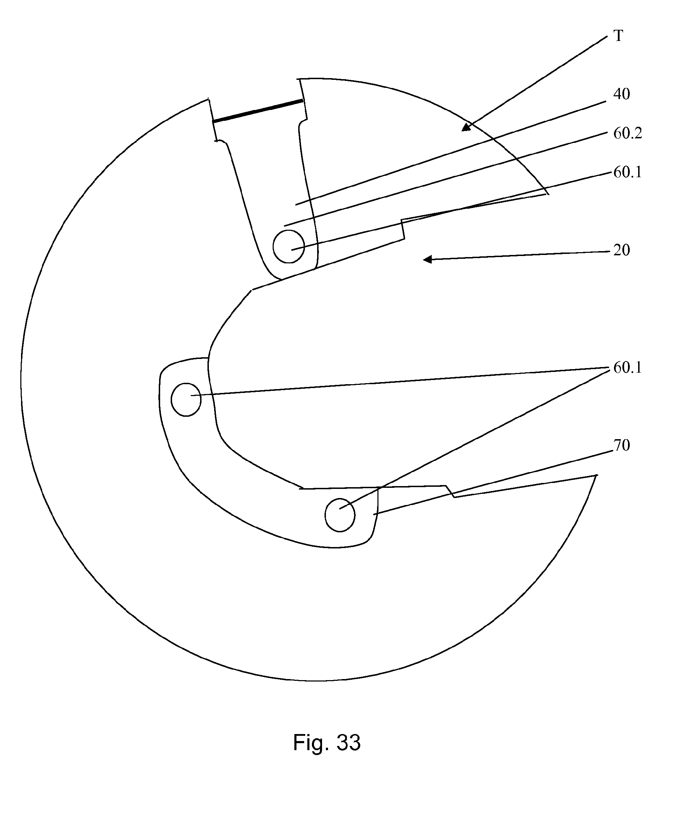

Die Vorderansicht eines Ausgangsbleches gem. Figur 32 mit umgebogener Lasche 40 ist in Figur 33 dargestellt. Die Lasche 40 verstärkt nach dem Umbiegen den hier oberen Befestigungsbereich 30, so dass dort die doppelte Blechdicke vorhanden ist. Der zweite Durchbruch 60.2 fluchtet dabei im Wesentlichen mit dem ersten Durchbruch 60.1. Das Verstärkungsteil 70 ist ein separates flaches Blechteil, welches bevorzugt die gleiche Blechdicke wie das Ausgangsblech T aufweist aber aus einem anderen Material besteht, beispielsweise aus einem Werkstoff, der eine höhere Festigkeit als das Ausgangsblech T besitzt.

In den Figuren 34 bis 36 ist eine Variante der Befestigung eines Verstärkungsteils 70 im Bereich eines Durchbruchs 20 im Befestigungsbereich 30 dargestellt. Das Verstärkungsteil 70 weist einen Flansch 70.1 und einen zylindrischen Bereich 70.2 sowie eine Durchgangsöffnung 70.3 auf. Gemäß Figur 34 ist das Verstärkungsteil 70 mit dem zylindrischen Bereich 70.2 durch einen Durchbruch 60.1 eines Befestigungsbereiches 30 in Pfeilrichtung steckbar. Das Verstärkungsteil 70, welches mit dem zylindrischen Bereich 70.2 durch den Durchbruch 60.1 greift und mit dem Flansch 70.1 an der beispielsweise Oberseite 10.1 des Ausgangsblechs T anliegt, zeigt Figur 35. Nun wird der durch das Ausgangsblech T ragende Teil des zylindrischen Bereiches 70.2 radial nach außen in Pfeilrichtung umgebördelt bzw. verstemmt und kommt dadurch an der anderen Seite - hier der Unterseite 10.2 des Ausgangsblechs T - zur Anlage (siehe Figur 36). Die Durchgangsöffnung 70.3 bildet dann die Ausnehmung, durch welche ein Befestigungsmittel, z.B. die Schraube zur Befestigung am Bremssattel greift (nicht dargestellt). Es ist gemäß einer nicht dargestellten Ausführungsvariante auch möglich eine Lasche bzw. Laschen, wie sie in den Figuren 25 bis 33 dargestellt sind, mit einem zylindrischen Bereich ( der einen Durchbruch aufweist) zu versehen und umzubiegen, so dass der zylindrische Bereich durch den Durchbruch 6.1 in Ausgangsblech ragt und dann ebenfalls den zylindrischen Bereich der Lasche zu verstemmen, so dass die Lasche dadurch befestigt ist.

Figur 37 zeigt einen Schnitt durch einen Befestigungsbereich 3, bei welchem eine Verstärkung 80 durch Auftragsschweißen oder Auftragslöten auf das Ausgangsblech T aufgebracht ist und anschließend der Durchbruch 60.1 eingebracht wurde.

Es ist weiterhin möglich, in das Ausgangsblech T im Befestigungsbereich 30 eine größere Ausstanzung 90 einzubringen und in diese ein Verstärkungsteil 70 einzusetzen; zwei Varianten dazu zeigen die Figuren 38 und 39.

In Figur 38 ist ein Schnitt durch einen Befestigungsbereich 30 dargestellt, der eine Ausstanzung 90 aufweist, in der ein Verstärkungsteil 70 sitzt, welches eine geringere Dicke als die Blechdicke s des Ausgangsblechs T aufweist und in einem Flanschbereich 70.1 auf der Oberseite 10.1 aufliegt und beispielsweise durch eine Klebeverbindung 60 befestigt ist wobei selbstverständlich auch eine andere Verbindungsart z.B. eine Schweiß- oder Lötverbindung möglich ist. Das in Figur 38 dargestellte Verstärkungsteil 70 weist eine Durchgangsöffnung 70.3 für die Befestigung am Bremssattel (nicht dargestellt) auf.

Figur 39 zeigt einen Schnitt durch einen Befestigungsbereich 30, der eine Ausstanzung 90 aufweist, in der ein Verstärkungsteil 70 mit seinem Außenumfang sitzt und mittels einer Schweißverbindung 100 befestigt wurde, wobei das Verstärkungsteil 70 eine größere Dicke als die Blechdicke des Ausgangsblechs T aufweist. Auch hier weist das Verstärkungsteil 70 eine Durchgangsöffnung zur Festlegung an einem Bremssattel oder dergleichen auf.

Es ist möglich, das Ausgangsblech T wird vor oder nach dem herstellen der Verstärkung umzuformen (bedarfsweise auch dreidimensional, z.B. teller- oder schalenartig) und mit den Ausformungen 3 bzw. weiteren Versteifungsstrukturen S zu versehen.

Das mit der Verstärkung im Befestigungsbereich ausgestattete Bremsabdeckblech bietet eine wesentlich sichere und stabilere Befestigung am Radträger.

Es ist selbstverständlich auch möglich, andere Flächenelemente, beispielsweise eine Trennwand oder Abdeckung, ein Karosserieteil, eine Lehne eines Sitzes oder einer Sitzbank und dergleichen, mit entsprechenden versteifenden Ausformungen zu versehen und bei einer sehr reduzierten Blechdicke an erforderlichen Positionen eine Verstärkung bzw. Verstärkungen anzubringen, wie sie in den vorgenannten Beispielen (Figuren 25 bis 39) anhand eines Bremsabdeckbleches beschrieben wurde/n.

## Patentansprüche

1. Flächenelement, welches insbesondere für ein Kraftfahrzeug einsetzbar ist, und eine Vielzahl von Ausformungen aufweist, **dadurch gekennzeichnet, dass** die Ausformungen in einem oder mehreren Flächenereichen des Flächenelementes ausgebildet sind und ein oder mehrere gleiche oder unterschiedliche Muster bilden.

2. Flächenelement nach Anspruch 1, **dadurch gekennzeichnet, dass** die Fächenbereiche zumindest bereichsweise umfangsseitig mit einem versteifenden Randbereich abgesetzt sind und dass ein Bereich des Flächenelementes, der keine Ausformungen besitzt, eine erste Mittelnormale N1 aufweist und dass die erste Mittelnormale N1 höhenmäßig versetzt ist zu einer zweiten Mittelnormale (N2) wenigstens eines Ausformungen aufweisenden Flächenbereiches.

3. Flächenelement nach Anspruch 1 oder 2, **dadurch gekennzeichnet, dass** die ein Muster bildenden Ausformungen in ihrer Größe zumindest teilweise unterschiedlich sind und dabei eine Selbstähnlichkeit aufweisen.

4. Flächenelement nach einem der Ansprüche 1 bis 3, **dadurch gekennzeichnet, dass** die Ausformungen eine dreieckige Form, eine viereckige Form, eine Tropfenform oder eine ovale oder runde Form aufweisen oder sind als Vieleck mit mehr als sechs Ecken oder in der Art von bionischen Strukturen ausgebildet sind, die beliebig in Anordnung und Größe miteinander kombiniert sein können und sich über einen begrenzten Flächenbereich erstrecken und dass in den Bereichen, in denen kein Muster eingebracht ist, ein oder mehrere Versteifungselemente angeordnet sein können.

5. Flächenelement nach einem der Ansprüche 1 bis 4, **dadurch gekennzeichnet, dass** ein oder mehrere Versteifungselemente in Flächenbereiche, welche mit dem Muster versehen sind, eingebracht und mit dem Muster überlagert sind.

6. Flächenelement nach einem der Ansprüche 1 bis 5, **dadurch gekennzeichnet, dass** es zumindest bereichsweise einen gebogenen Randbereich aufweist, bis in welchen sich die ein Muster bildenden Ausformungen und/oder die Versteifungselemente erstrecken.

7. Flächenelement nach einem der Ansprüche 1 bis 6, **dadurch gekennzeichnet, dass** das Muster in eine oder mehrere Ausformung/en (3.1) oder eine oder mehrere Unterausformungen (3.1') des Flächenelements eingebracht ist.

8. Flächenelement nach einem der Ansprüche 1 bis 7, **dadurch gekennzeichnet, dass** das Flächenelement voneinander beabstandete Versteifungselemente in Form von Rippen und/oder Versteifungssicken aufweist, die in sich geschlossen oder offen ausgebildet sind und die Ausformungen in wenigstens einem sich zwischen den Versteifungselementen erstreckenden Flächenbereich des Flächenelementes ausgebildet sind.

9. Flächenelement nach einem der Ansprüche 1 bis 8, **dadurch gekennzeichnet, dass** die Ausformungen (3.1) eine Höhe (h), eine Öffnung (3.2) und einen sich daran anschließenden Wandbereich (4) aufweisen und sich ausgehend von der Öffnung (3.2) über die Höhe (h) symmetrisch oder asymmetrisch verjüngen und/oder dass sich die Öffnungsweite der Ausformung (3.1) über die Höhe (h) gleichmäßig oder stufenförmig verringert.

10. Flächenelement nach einem der Ansprüche 1 bis 9, **dadurch gekennzeichnet, dass** sich die Orientierungsrichtung der Ausformungen von innen nach außen erstreckt und dass sich Art und/oder die Tiefe (Strukturtiefe) der Ausformungen von innen nach außen und/oder umfangsseitig ändert oder gleich ist

11. Flächenelement nach einem der Ansprüche 1 bis 10, **dadurch gekennzeichnet, dass** die Ausformungen in der Mitte des Musters tiefer sind als außen oder umgekehrt.

12. Flächenelement nach einem der Ansprüche 1 bis 11, **dadurch gekennzeichnet, dass** wenigstens ein Befestigungsbereich und/oder Funktionsbereich des Flächenelementes keine Ausformungen aufweist und/oder mit einer Verstärkung versehen ist.

13. Flächenelement nach einem der Ansprüche 1 bis 12, **dadurch gekennzeichnet, dass** zwischen den Ausformungen aufweisenden Flächenbereichen und/oder innerhalb dieser Flächenbereiche ein oder mehrere Funktionsbereiche in Form von ebenen und/oder strukturierten Flächen angeordnet sind, wobei wie Funktionsbereiche zur Befestigung weiterer Komponenten dienen können.

14. Flächenelement nach einem der Ansprüche 1 bis 13, **dadurch gekennzeichnet, dass** zwischen den Ausformungen aufweisenden Flächenbereichen und/oder innerhalb dieser Flächenbereiche und/oder innerhalb der Funktionsbereiche ein oder mehrere Durchbrüche und/oder Aussparungen angeordnet sind.

15. Flächenelement nach einem der Ansprüche 1 bis 14, **dadurch gekennzeichnet, dass** durch die Gestaltung und Anordnung der Ausformung/en im Flächenelement die Funktionseigenschaften des Flächenelemente beeinflusst werden und insbesondere der Strömungswiderstand verringert und/oder akustische Eigenschaften und/oder mechanische Eigenschaften beeinflussbar sind und durch die in das Flächenelement eingebrachten Ausformungen bei Verwendung als Außenteil der Karosserie Selbstreinigungseffekte erzielbar sind und/oder dass bei Verwendung des Flächenelementes als Innenteil des Fahrgastraumes die Haptik des Flächenelementes im Vergleich zu anderen Flächenelementen veränderbar ist.
